# EUROPÄISCHE PATENTSCHRIFT

(11) **EP 0 890 217 B1**
(45) Veröffentlichungstag und Bekanntmachung des Hinweises auf die Patenterteilung: **22.09.2004**
(21) Anmeldenummer: 97917249.1
(22) Anmeldetag: 04.03.1997
(51) Int. Cl.: H02P 6/18, H02P 8/36

(54) **ANSCHLAGS- UND BLOCKIERERKENNUNG BEI EINEM SCHRITTMOTOR**
SYSTEM FOR DETECTING ABUTMENT AND BLOCKING IN A STEPPED MOTOR
DETECTION DE VENUE EN BUTEE ET DE BLOCAGE D'UN MOTEUR PAS A PAS

(30) Priorität: 29.03.1996 DE 19612597
(43) Veröffentlichungstag der Anmeldung: 13.01.1999
(73) Patentinhaber: ROBERT BOSCH GMBH, 70442 Stuttgart (DE)
(72) Erfinder: MUNZ, Juergen, D-70771 Leinfelden (DE); EISENHARDT, Harald, D-71227 Rutesheim (DE)
(74) Vertreter: Müller, Georg
(86) Internationale Anmeldenummer: PCT/DE1997/000392
(87) Internationale Veröffentlichungsnummer: WO 1997/037425

(56) Entgegenhaltungen:
- EP-A- 0 382 887
- GB-A- 2 076 567
- US-A- 5 327 053

## Beschreibung

### Stand der Technik

Die Erfindung geht aus von einer Anschlags- und Blockiererkennung bei einem Schrittmotor, bei aus dem Verlauf einer aktuellen Motorgröße ein für die Anschlags- bzw. Blockiererkennung signifikantes Signal ermittelt wird, gemäß der im Oberbegriff des Anspruchs 1 definierten Gattung. Eine solche Anschlags- und Blockiererkennung ist aus der EP 382 887 bekannt geworden.

Aus DE 44 19 813 A1 ist eine Vorrichtung zum Betreiben eines Elektromotors, Schrittmotor bzw. Kommutatormotor, bekannt, die eine Überlastung oder ein Blockieren des Antriebs, für den der Elektromotor die Kraftquelle ist, aus einer Kenngröße eines durch den Elektromotor fließenden Stromes auswertet. Die Ermittlung der Kenngröße kann danach entweder innerhalb eines Zeitintervalls, welches noch innerhalb des Einschaltvorganges nach einer Startzeit des Elektromotors liegt, erfolgen, oder zu einem vorgegebenen Abtastzeitpunkt, der eine gewisse Verzögerungszeit nach dem Startpunkt liegt. Als Kenngröße des auszuwertenden Stromes kann die Stromamplitude, die Stomänderung oder eine Stromdifferenz dienen, die als Signal für die Anschlags- bzw. Blockiererkennung gewertet wird. Wesentlich bei dieser bekannten Vorrichtung ist es, daß der Elektromotor zu Beginn des genannten Startpunktes wenigstens annäherungsweise stromlos sein sollte und daß das Zeitintervall bzw. der Abtastzeitpunkt vor dem Erreichen des stationären Motorstroms liegt.

### Vorteile der Erfindung

Die erfindungsgemäße Anschlags- und Blockiererkennung bei einem Schrittmotor mit den kennzeichnenden Merkmalen des Anspruchs 1 hat demgegenüber den Vorteil, daß sie auf einem gänzlich anderen Prinzip beruhenden, nämlich der Auswertung von Spannung, und eine kostengünstigere Anschlags- und Blockiererkennung bei einem Schrittmotor zur Verfugung stellt.

Gemäß der Erfindung wird dies prinzipiell dadurch erreicht, daß eine Auswerteschaltung vorgesehen ist, welche die in mindestens einer nichtbestromten Wicklung des Schrittmotors induzierte Spannung, die von einer bestromten Wicklung des Schrittmotors hervorgerufen wird, detektiert und dahingehend auswertet, ob der Motor blockiert oder beweglich ist.

Durch die in den weiteren Ansprüchen niedergelegten Maßnahmen sind vorteilhafte Weiterbildungen und Verbesserungen der im

Anspruch 1 angegebenen Anordnung möglich.

In vorteilhaften Ausgestaltungen der Erfindung ist es möglich, die Auswertung durch die Auswerteschaltung nach einer starren oder nach einer elastischen Blockierung hin durchzuführen.

Gemäß vorteilhafter Ausgestaltung der Erfindung erfolgt die Detektierung einer starren Blockierung im Stillstand des Schrittmotors und in einem Testschritt, bei dem eine Wicklung des Schrittmotors bestromt wird, und die in der anderen Wicklung des Schrittmotors möglicherweise induzierte Spannung, welche bei starrer Blockierung im wesentlichen Null ist, ausgewertet wird.

Gemäß einer anderen vorteilhaften Ausgestaltung der Erfindung detektiert die Auswerteschaltung zur Erkennung einer elastischen Blockierung Spitzen im induzierten Spannungsverlauf in der nicht bestromten Wicklung. Diese Spitzen können sowohl negativ wie positiv sein. In zweckmäßiger Weiterbildung dieser Ausgestaltung der Erfindung werden die Spitzen bei Übersteigen eines bestimmten Schwellwerts als elastische Blockierung erkannt.

In besonders zweckmäßiger Weiterbildung erfolgt die Erkennung einer elastischen Blockierung bei definiert langsam laufendem Schrittmotor.

Entsprechend einer vorteilhaften Ausgestaltung der Erfindung enthält die für die Erkennung einer elastischen Blockierung vorgesehene Auswerteschaltung für jede Wicklung des Schrittmotors einen separaten Komparator, wobei die Ausgänge der Komparatoren über jeweils eine Diode auf einen gemeinsamen Ausgang gefuhrt sind, und an diesem Ausgang dann ein Signal ansteht, wenn in den induzierten Spannungen in einer der Wicklungen des Schrittmotors eine einen Schwellwert übersteigende Spannungsspitze auftritt.

Entsprechend einer anderen vorteilhaften Ausgestaltung der Erfindung enthält die Auswerteschaltung für die Erkennung einer starren Blockierung für eine beliebige Wicklung des Schrittmotors einen Komparator, dem über eine Diode und einen Spannungsteiler geleitete Spannungsspitzen zuführbar sind, und bei dem der Komparator direkt auf den Ausgang geführt ist und ein Ausgangssignal dann abgibt, wenn eine entsprechend hohe Spannungsspitze induziert wurde.

Eine Anschlagserkennung, wie sie durch die Erfindung zur Verfügung gestellt ist, wobei es sich hier um eine Blockierung durch den mechanischen Anschlag handelt, erhöht den Komfort des Systems, bei dem es angewandt wird, da die Geräuschbelästigung durch den Lauf des Schrittmotors gegen einen Anschlag reduziert wird. Durch die Anschlagserkennung kann die Anzahl der Schritte von Anschlag zu Anschlag automatisiert und ohne zusätzlichen Aufwand ausgemessen werden.

Eine Blockiererkennung, wie sie durch die Erfindung zur Verfügung gestellt ist, ermöglicht die Erkennung einer zeitweiligen Blockierung, die Anwendung geeigneter Ansteuerstrategien zur Korrektur der Position des Schrittmotors; die Minimierung der Auswirkungen bzw. eine Diagnoseausgabe im Fehlerfall sowie den jeweils adäquaten Einsatz von Fehlerbehandlungskonzepten. Damit ist insgesamt Komfort und Flexibilität des Systems wesentlich verbessert.

### Zeichnung

Die Erfindung ist anhand mehrerer in der Zeichnung dargestellter Ausführungsbeispiele in der nachfolgenden Beschreibung näher erläutert. Es zeigen:
- Fig. 1: schematisch ein Blockschaltbild eines Schrittmotors mit vier Wicklungen und den zugehörigen Schaltern;
- Fig. 2: schematisch ein Blockschaltbild einer moglichen Auswerteschaltung zur Erkennung einer elastischen Blockierung;
- Fig. 3: schematisch ein Blockschaltbild einer möglichen Auswerteschaltung zur Erkennung einer starren Blockierung;
- Fig. 4: ein Zeitdiagramm, welches den Zusammenhang zweier Wicklungspaare zeigt, von denen jeweils eine Wicklung abwechselnd bestromt und nicht bestromt ist;
- Fig. 5: ein Zeitdiagramm, welches in ähnlicher Darstellung wie Fig. 4, den Spannungsverlauf in der nicht bestromten Wicklung zeigt, wenn eine elastische Blockierung vorliegt;
- Fig. 6: ein Zeitdiagramm, welches den Zusammenhang von Stromverlauf in einer bestromten Wicklung und induzierter Spannung in nicht bestromter Wicklung bei einem Testschritt zur Ermittlung einer starren Blockierung zeigt, und
- Fig. 7: ein Zeitdiagramm, welches den Zusammenhang von Stromverlauf in einer bestromten Wicklung und induzierter Spannung in nicht bestromter Wicklung bei einem Testschritt zur Ermittlung einer elastischen Blockierung zeigt.

### Beschreibung der Ausführungsbeispiele

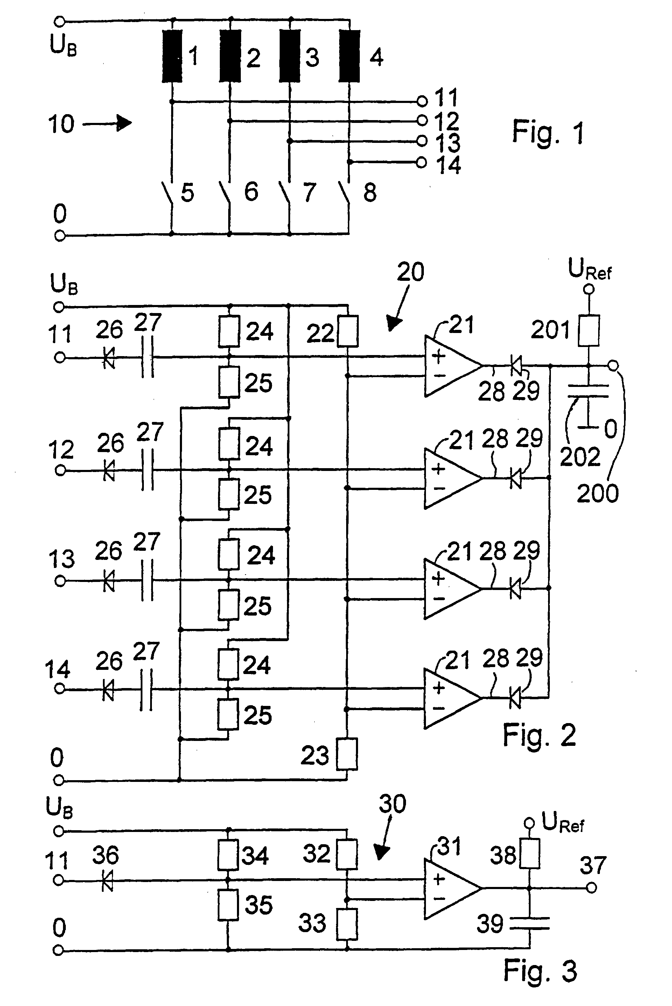

In Fig. 1 ist schematisch ein Blockschaltbild eines Schrittmotors dargestellt. Der Schrittmotor 10 enthält vier Wicklungen 1, 2, 3, und 4, die jeweils in Reihe mit einem zugehörigen Schalter 5, 6, 7, und 8 zwischen positiver Versorgungsspannung U_{B}, beispielsweise der Batterie eines Kraftfahrzeuges, und Massepotential 0 liegen. Zwischen jeder Wicklung und zugehörigem Schalter ist eine Anzapfung 11, 12, 13, 14 vorgesehen, die zur Spannungsüberwachung der jeweiligen Wicklung 1 - 4 zur erfindungsgemäßen Anschlags- und Blockiererkennung dienen. Durch gesteuertes Schließen und öffnen der Schalter 5 - 8 werden die zugehörigen Wicklungen 1 - 4 des Schrittmotors 10 an die Versorgungsspannung U_{B} gelegt bzw. von ihr getrennt und damit bestromt bzw. nicht bestromt.

Der in Fig. 1 dargestellte Schrittmotor 10 mit den Schaltern 5 - 8, die zwischen Massepotential 0 und den Wicklungen 1 - 4 angeordnet sind, bildet eine sogenannte Schrittmotoransteuerung mit Masseschaltern oder Lowside-Treibern. Auf diese Ansteuerungsart beziehen sich die nachfolgenden Ausführungen betreffend die Zeitdiagramme und die verschiedenen Auswertungen. Es sei darauf verwiesen, daß prinzipiell auch eine Ansteuerung mit Highside-Schaltern möglich ist.

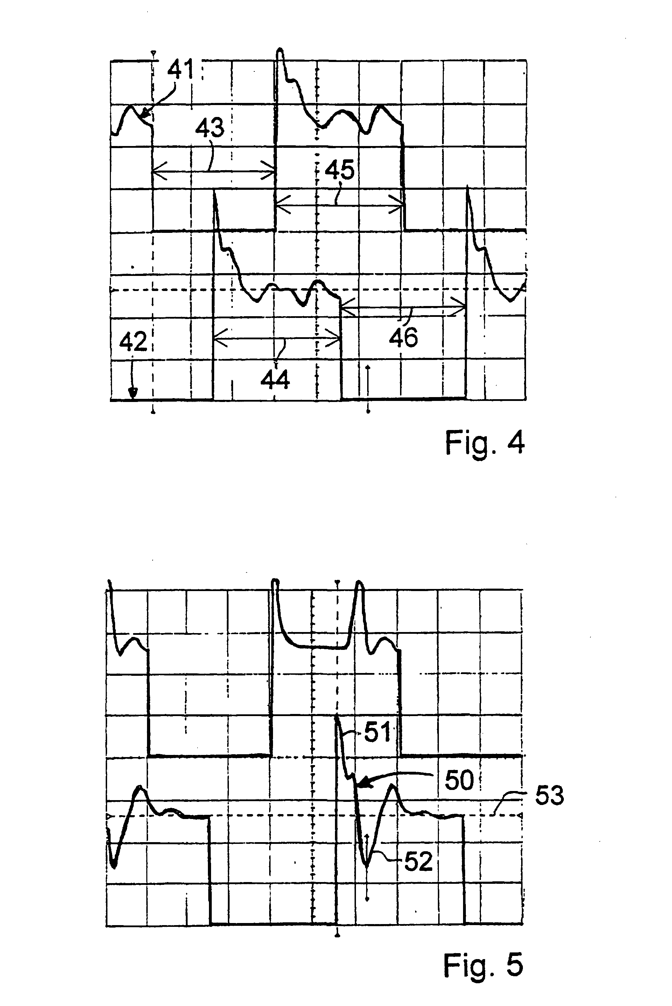

Im Zeitdiagramm, das in Fig. 4 dargestellt ist, ist der Zusammenhang zweier Wicklungspaare gezeigt, von denen jeweils eine Wicklung abwechselnd bestromt und nicht bestromt ist. Die Darstellung zeigt den Spannungsverlauf in Abhängigkeit von der Zeit. Im oberen Bereich des Zeitdiagramms ist mit 41 der Spannungsverlauf beispielsweise eines ersten Wicklungspaares, bestehend aus den Wicklungen 1 und 3, und im unteren Bereich des Zeitdiagramms ist mit 42 der Spannungsverlauf beispielsweise eines zweiten Wicklungspaares, bestehend aus den Wicklungen 2 und 4, dargestellt. Im Zeitabschnitt 43 im Spannungsverlauf 41 liegt eine Bestromung vor, da die Spannung bei geschlossenem Schalter im wesentlichen Null ist. Dies kann im gezeigten Beispiel beispielsweise ein geschlossener Schalter 5 bei bestromter Wicklung 1 sein. Im direkt nachfolgenden Zeitabschnitt 45 ist dann der Schalter 5 geöffnet und die Wicklung 1 unbestromt. Um 90° elektrisch versetzt ist dies auch beim Spannungsverlauf 42 für das zweite Wicklungspaar, gebildet aus den Wicklungen 2 und 4 der Fall. So ist beispielsweise im Zeitabschnitt 44 der Schalter 6 geschlossen und somit die Wicklung 2 bestromt. Im direkt nachfolgenden Zeitabschnitt 45 ist dann der Schalter 6 geöffnet und die Wicklung 2 unbestromt. Die Verhältnisse sind für die beiden anderen Schalter 7 und 8 sowie ihre zugehörigen Wicklungen 3 und 4 dieselben und brauchen daher nicht näher erläutert werden.

Die erfindungsgemäße Anschlags- und Blockiererkennung basiert auf der Auswertung der induzierten Spannung in mindestens einer nicht bestromten Wicklung des Schrittmotors. Bei einem frei beweglichen Schrittmotor ergibt sich auf Grund der Bewegung des Ankers eine induzierte Spannung in unbestromten Wicklungen. Dieses Verhalten ist aus der Darstellung im Zeitdiagramm der Fig. 4 erkennbar.

Bei der erfindungsgemäßen Anschlags- und Blockiererkennung erfolgt die Auswertung im Hinblick auf eine starre und eine elastische Blockierung. Beim Vorliegen einer starren Blockierung bewegt sich der Anker bei der Bestromung einer geeigneten Wicklung im Stillstand des Schrittmotors nicht. Beim Vorliegen einer elastischen Blockierung kann der Anker des Schrittmotors einen Schritt nicht vollstandig ausführen. Der Schrittmotor wird ausgelenkt und fällt wieder in seine Ausgangslage zurück. Diese Schwingung führt zu einer induzierten Spannung in den nicht bestromten Wicklungen. Dies ist im Zeitdiagramm der Fig. 5 dargestellt. Die elastische Blockierung ist in der Praxis der bei weitem am häufigsten auftretende Fall, da im allgemeinen durch an den Schrittmotor angebaute mechanische Übertragungsteile wie z.B. Getriebe, Gestänge und Klappen oder sonstige zu verstellende Teile das Gesamtsystem eine gewisse Elastizität besitzt.

Anhand der Fig. 2 wird nachfolgend eine mögliche Auswerteschaltung 20 zur Erkennung einer elastischen Blockierung eines Schrittmotors 10 im Zusammenhang mit dem in Fig. 5 dargestellten Zeitdiagramm erläutert.

Generell ist festzuhalten, daß erfindungsgemäß die Auswerteschaltung 20 insbesondere Spannungsspitzen 51 und 52 im induzierten Spannungsverlauf 50 in der nicht bestromten Wicklung detektiert, wie in Fig. 5 dargestellt. Übersteigen die Spannungsspitzen 51 und 52 einen bestimmten Schwellwert, wird von der Auswerteschaltung 20 auf elastische Blockierung erkannt und ein entsprechendes Ausgangssignal erzeugt. Dieses Ausgangssignal kann als externer Interrupt einem Mikrokontroller in einer nicht dargestellten Steuerschaltung des Schrittmotors 10 zur Weiterverarbeitung zugeführt werden.

Die Spannungsspitzen 51 und 52 weisen unterschiedliche Polarität auf, wie es in Bezug auf die zugehörige Nullinie 53 in Fig. 5 gut erkennbar ist. Auf dieser Polarität kann in geeigneter Weise in der Auswerteschaltung 20 zurückgegriffen werden. Desweiteren ist es von besonderem Vorteil, die Detektierung bei einem definiert langsam laufenden Schrittmotor durchzuführen. Die Notwendigkeit für eine hohe Zeitempfindlichkeit der Auswerteschaltung entfallt dann und es können kostengünstigere Bauelemente verwendet werden.

Die in Fig. 2 dargestellte Auswerteschaltung 20 enthält vier gleiche Zweige für die vier Wicklungsanzapfungen 11 bis 14 aus Fig. 1. In jedem Zweig ist für jede Wicklung ein separater Komparator 21 vorgesehen. Jeder Komparator 21 hat eine mit + bezeichneten nichtinvertierenden und einen mit - bezeichneten invertierenden Eingang. Die invertierenden Eingänge der Komparatoren 21 sind über einen aus den Widerständen 22 und 23 bestehenden, zwischen Versorgungsspannung U_{B} und Massepotential 0 liegenden Spannungsteiler auf ein bestimmtes Potential gelegt. Desweiteren sind die nichtinvertierenden Eingänge der Komparatoren 21 über einen aus den Widerständen 24 und 25 bestehenden, zwischen Versorgungsspannung U_{B} und Massepotential 0 liegenden Spannungsteiler auf ein bestimmtes Potential gelegt. Zwischen jedem Eingang 11 - 14 der Auswerteschaltung 20 und jedem nichtinvertierenden Eingang jedes Komparators 21 liegt die Reihenschaltung einer Diode 26 und eines Kondensators 27. Die Diode 26 ist im dargestellten Ausführungsbeispiel so gepolt, daß nur negative Spannungen, also z.B. die Spannungsspitze 52 gemäß Fig. 5, und über den Kondensator 27 nur Flanken auf den mit + bezeichneten nichtinvertierenden Eingang des Komparators 21 gelangen.

Durch den Spannungsteiler 22/23 wird der Schwellwert für den Komparator 21 am mit - bezeichneten invertierenden Eingang festgelegt. Der Spannungsteiler 24/25 sorgt dafür, daß nur Spannungsspitzen 52, die ein gewisses Potential übersteigen auf den nichtinvertierenden Eingang gelangen. Die Spannung an den invertierenden Eingängen der Komparatoren 21 ist durch den Spannungsteiler 22/23 so gewählt, daß sie kleiner ist als die Spannung an den nichtinvertierenden Eingängen. Durch die Dioden 26 werden nur negative Spannungen, durch die Kondensatoren 27 nur Flanken auf die nichtinvertierenden Eingänge der Komparatoren 21 ausgekoppelt. Da die Abgriffe der beiden Spannungsteiler 22/23 und 24/25 jeweils im gleichen Verhältnis mit der möglicherweise schwankenden Versorgungsspannung U_{B} gleiten, ist das am Komparator 21 anstehende Ausgangssignal von den Schwankungen der Versorgungsspannung unabhängig.

Jeder Komparator 21 weist einen Ausgang 28 auf, der über eine negativ gepolte Diode 29 auf einen für alle Komparatoren 21 gemeinsamen Ausgang 200 geführt sind. An diesen gemeinsamen Ausgang 200 sind noch ein Widerstand 201 an eine Referenzspannungsquelle U_{Ref} und ein Kondensator 202 an Massepotential 0 angeschlossen. Wie bereits erwähnt, stellt der gemeinsame Ausgang 200 dann ein Signal zur Verfügung, wenn die Spannungsspitzen 52 im induzierten Spannungsverlauf 50 einer nicht bestromten Wicklung einen Referenzwert übersteigen und damit auf elastische Blockierung erkannt wird. Das am gemeinsamen Ausgang 200 erscheinende, die Blockierung angebende Ausgangssignal kann als externer Interrupt dem Mikrokontroller der Steuerschaltung des Schrittmotors zugeführt und dort entsprechend weiter verarbeitet werden.

Bei der Auswertung zur Erkennung einer elastischen Blockierung wird die Tatsache genutzt, daß durch den Rückfall des Ankers in den nichtbestromten Wicklungen eine gegenphasige Spannung induziert wird. Die Spannung sinkt an mindestens einem nichtinvertierenden Eingang eines Komparators 21 unter die Spannung des invertierenden Eingangs. Dieser Komparatorausgang schaltet. Damit kann ein Interrupt ausgelost und der blockierte Schrittmotor erkannt werden. Beim beweglichen Schrittmotor hingegen bleibt die Spannung an den nichtinvertierenden Eingängen der Komparatoren 21 größer als an den invertierenden Eingängen.

Anhand der Fig. 3 wird nachfolgend eine mögliche Auswerteschaltung 30 zur Erkennung einer starren Blockierung eines Schrittmotors 10 erläutert.

In einem beliebigen Zweig, beispielsweise mit der Wicklung 1 und der Anzapfung 11 zwischen Wicklung 1 und zugehörigem Schalter 5, die als Eingang für die Auswerteschaltung 30 dient, ist ein Komparator 31 vorgesehen. Der Komparator 31 hat eine mit + bezeichneten nichtinvertierenden und einen mit - bezeichneten invertierenden Eingang. Der invertierende Eingang des Komparators 31 ist über einen aus den Widerständen 32 und 33 bestehenden, zwischen Versorgungsspannung U_{B} und Massepotential 0 liegenden Spannungsteiler auf ein bestimmtes Potential gelegt. Desweiteren ist der nichtinvertierende Eingang des Komparators 31 über einen aus den Widerständen 34 und 35 bestehenden, zwischen Versorgungsspannung U_{B} und Massepotential 0 liegenden Spannungsteiler auf ein bestimmtes Potential gelegt. Zwischen dem Eingang 11 der Auswerteschaltung 30 und dem nichtinvertierenden Eingang des Komparators 31 liegt eine Diode 36. Die Diode 36 ist im dargestellten Ausführungsbeispiel so gepolt, daß nur negative Flanken, d. h. negative Spannungsspitzen auf den mit + bezeichneten nichtinvertierenden Eingang des Komparators 31 gelangen. Durch den Spannungsteiler 32/33 wird der Schwellwert für den Komparator 31 am mit - bezeichneten invertierenden Eingang festgelegt. Der Spannungsteiler 34/35 sorgt dafür, daß nur Spannungsspitzen, die ein gewisses Potential übersteigen auf den nichtinvertierenden Eingang gelangen. Da die Abgriffe der beiden Spannungsteiler 32/33 und 34/35 jeweils im gleichen Verhältnis mit der möglicherweise schwankenden Versorgungsspannung U_{B} gleiten, ist das am Komparator 31 anstehende Ausgangssignal von den Schwankungen der Versorgungsspannung unabhängig.

Bei der Auswertung zur Erkennung einer starren Blockierung kann bei bekannter Position des Schrittmotors 10 z. B. durch Bestromung der Wicklung 1 ein 3/8-Schritt ausgeführt werden. Im nichtbestromten Wicklungspaar ergibt sich bei beim beweglichen Schrittmotor eine induzierte Spannung mit 180° Phasenverschiebung. Die Spannung am durch die Stopposition des Schrittmotors bekannten Eingang 11 für den nichtinvertierenden Eingang des Komparators sinkt unter die Spannung am invertierenden Eingang und der Ausgang schaltet. Da aber beim starr blockierten Schrittmotor keine Spannung induziert wird, schaltet der Komparator 31 nicht.

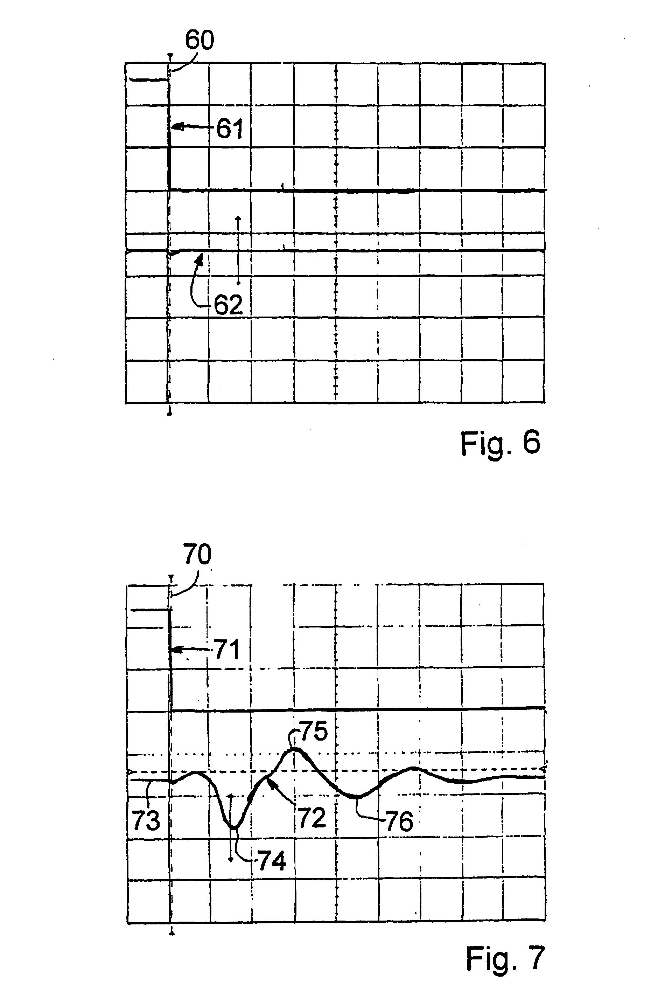

In Fig. 6 ist anhand eines Zeitdiagramms der Zusammenhang von Stromverlauf in einer bestromten Wicklung und induzierter Spannung in nicht bestromter Wicklung bei einem Testschritt zur Ermittlung einer Blockierung dargestellt. Im oberen Teil ist der Spannungsverlauf 61 dargestellt, der von hoher Spannung vor und niedriger Spannung nach einem Zeitpunkt 60 für die Bestromung einer bestimmten Wicklung sorgt. Im unteren Bereich des Zeitdiagramms ist der Spannungsverlauf 62 in einer nicht bestromten Wicklung des anderen Wicklungspaares dargestellt. Es ist vor und nach dem Zeitpunkt 60 keine Veränderung des Spannungsverlaufs 62 zu beobachten. Da bei einer starren Blockierung in nicht bestromten Wicklungen wegen des Stillstandes des Ankers keine Spannung induziert wird, liegt demnach eine starre Blockierung vor.

In Fig. 7 ist anhand eines Zeitdiagramms der Zusammenhang von Stromverlauf in einer bestromten Wicklung und induzierter Spannung in nicht bestromter Wicklung bei einem weiteren Testschritt zur Ermittlung einer Blockierung dargestellt. Im oberen Teil ist der Spannungsverlauf 71 dargestellt, der von hoher Spannung vor und niedriger Spannung nach einem Zeitpunkt 70 für die Bestromung einer bestimmten Wicklung sorgt. Im unteren Bereich des Zeitdiagramms ist der Spannungsverlauf 72 in einer nicht bestromten Wicklung des anderen Wicklungspaares dargestellt. Vor dem Zeitpunkt 60 ist der Spannungsverlauf 72 fast konstant bei Null. Eine erhebliche Veränderung des Spannungsverlaufs 72 ist dagegen nach dem Zeitpunkt 70 zu beobachten. Es tritt eine relativ große negative Spannungsspitze 74, eine in der Amplitude kleinere Spannungsspitze 75 und wiederum eine in der Amplitude geringere negative Spannungsspitze 76 auf, bis die induzierte Spannung abklingt. Nur wenn sich der Anker des Schrittmotors bewegt kann eine Spannung induziert werden. Durch den Rückfall des Ankers bei nicht zu vollendendem Schritt tritt eine Schwingung und eine dadurch induzierte negative Spannung auf. Es liegt demnach eine elastische Blockierung vor.

Bei der erfindungsgemäß gestalteten Anschlags- und Blockiererkennung sind aufgrund der Auswertung der induzierten Spannung und der dadurch möglichen Auswerteschaltungen keine Spannungs- und Temperaturabhängigkeiten zu befürchten. Weiterhin stellt die erfindungsgemäß gestaltete Anschlags- und Blockiererkennung keine besonderen Anforderungen an einen eventuell in der Steuerschaltung verwendeten Mikrokontroller. Durch die erfindungsgemäß gestaltete Anschlags- und Blockiererkennung wird die Geräuschbelästigung durch den Lauf des Schrittmotors gegen einen Anschlag vermieden. Während des Laufs des Schrittmotors auftretende Schrittfehler werden in den Endanschlägen gefunden. Die Sollposition des Schrittmotors kann mit der Istposition abgeglichen werden. Die Istposition braucht nicht abgespeichert zu werden, da durch die erfindungsgemäß gestaltete Anschlags- und Blockiererkennung die Position des Schrittmotors mit geringer mechanischer Belastung und ohne Eichlaufgeräusche zu finden ist.

## Patentansprüche

1. Anschlags- und Blockiererkennung bei einem Schrittmotor (10), bei der durch Ermittlung einer Kenngröße aus dem Verlauf einer aktuellen Motorgröße im Vergleich mit einem Referenzwert ein Signal für die Anschlags- bzw. Blockiererkennung generiert wird,
**dadurch gekennzeichnet, daß**
eine Auswerteschaltung (20, 30) vorgesehen ist, welche die in mindestens einer nichtbestromten Wicklung (1 - 4) des Schrittmotors (10) induzierte Spannung (50), die von einer bestromten Wicklung des Schrittmotors hervorgerufen wird, detektiert und dahingehend auswertet, ob der Schrittmotor blockiert ist und
die Auswertung durch die Auswerteschaltung (20) nach einer elastischen Blockierung hin erfolgt, bei welcher der Schrittmotor einen Schritt nicht vollenden kann und pendelt ; hierzu wird eine in der nichtbestromten Wicklung induzierte gegenphasige Spannung detektiert.

2. Anschlags- und Blockiererkennung nach Anspruch 1, **dadurch gekennzeichnet, daß** die Auswerteschaltung (20) zur Erkennung der elastischen Blockierung Spitzen (52, 74) im induzierten Spannungsverlauf (50, 72) in der nicht bestromten Wicklung detektiert.

3. Anschlags- und Blockiererkennung nach Anspruch 2, **dadurch gekennzeichnet, daß** die Spitzen (52, 74) bei Übersteigen eines bestimmten Schwellwerts als elastische Blockierung erkannt werden.

4. Anschlags- und Blockiererkennung nach Anspruch 1, 2 oder 3, **dadurch gekennzeichnet, daß** die Erkennung der elastischen Blockierung bei definiert langsam laufendem Schrittmotor erfolgt.

5. Anschlags- und Blockiererkennung nach Anspruch 1 oder einem der Ansprüche 2 bis 4, **dadurch gekennzeichnet, daß** die Auswerteschaltung (20) für die Erkennung der elastischen Blockierung für jede Wicklung (1 - 4) des Schrittmotors (10) einen separaten Komparator (21) enthält, jedem nichtinvertierenden Eingang der Komparatoren (21) jeweils über eine Diode (26) und einen Kondensator (27) die induzierte Spannung zugeführt wird, jeder nichtinvertierende Eingang der Komparatoren (21) jeweils mit einem zwischen Versorgungsspannung (U_{B}) und Massepotential (0) angeschlossenen Spannungsteiler (24, 25) verbunden ist, die invertierenden Eingänge der Kompararatoren (21) an einen weiteren zwischen Versorgungsspannung (U_{B}) und Massepotential (0) angeschlossenen Spannungsteiler (22, 23) gelegt ist, die Ausgänge (28) der Komparatoren (21) über jeweils eine Diode (29) auf einen gemeinsamen Ausgang (200) geführt sind, und daß an diesem Ausgang (200) dann ein Signal ansteht, wenn in den induzierten Spannungen in einer der Wicklungen (1 - 4) des Schrittmotors (10) eine einen durch eine Referenzspannung (U_{Ref}) am Ausgang (200) festlegbaren Schwellwert übersteigende Spannungsspitze (52, 74) auftritt.

6. Anschlags- und Blockiererkennung nach Anspruch 1, **dadurch gekennzeichnet, daß** eine Detektierung einer starren Blockierung im Stillstand des Schrittmotors (10) erfolgt und daß dabei in einem Testschritt, bei dem eine Wicklung des Schrittmotors bestromt wird und die dabei in der anderen Wicklung des Schrittmotors möglicherweise induzierte Spannung (62), welche bei starrer Blockierung im wesentlichen Null ist, ausgewertet wird.

7. Anschlags- und Blockiererkennung nach Anspruch 6, **dadurch gekennzeichnet, daß** die Auswerteschaltung (30) für die Erkennung einer starren Blockierung für eine beliebige Wicklung des Schrittmotors (10) einen Komparator 31) enthält, dem über eine Diode (36) und einen Spannungsteiler (34, 35) geleitete Spannungsspitzen zuführbar sind, und bei dem der Komparator (31) direkt auf den Ausgang (37) geführt ist und ein Ausgangssignal dann abgibt, wenn eine entsprechend hohe Spannungsspitze induziert wurde.

## Claims

1. Stopping and stalling identification for a stepping motor (10), in which a signal for stopping or stalling identification is generated by determination of a characteristic variable from the profile of an instantaneous motor variable in comparison with a reference value,
**characterized in that**
an evaluation circuit (20, 30) is provided, which detects the voltage (50) which is induced in at least one winding (1-4) (through which no current flows) of the stepping motor (10) and which is caused by a winding (through which current flows) in the stepping motor, and evaluates this voltage (50) in order to determine whether the stepping motor has stalled, and
the evaluation by means of the evaluation circuit (20) is carried out after elastic stalling, in which the stepping motor cannot complete a step, and oscillates, for which purpose an antiphase voltage which is induced in the winding through which no current flows is detected.

2. Stopping and stalling identification according to Claim 1, **characterized in that**, in order to identify elastic stalling, the evaluation circuit (20) detects peaks (52, 74) in the induced voltage profile (50, 72) in the winding through which no current flows.

3. Stopping and stalling identification according to Claim 2, **characterized in that** the peaks (52, 74) are identified as elastic stalling when a specific threshold value is exceeded.

4. Stopping and stalling identification according to Claim 1, 2 or 3, **characterized in that** elastic stalling is identified when the stepping motor runs in a defined slow manner.

5. Stopping and stalling identification according to Claim 1 or one of Claims 2 to 4, **characterized in that** the evaluation circuit (20) contains a separate comparator (21) for identification of elastic stalling for each winding (1-4) of the stepping motor (10), each non-inverting input of the comparators (21) is supplied with the induced voltage, in each case via a diode (26) and a capacitor (27), each non-inverting input of the comparators (21) is connected to in each case one voltage divider (24, 25) which is connected between the supply voltage (U_{B}) and earth potential (0), the inverting inputs of the comparators (21) are connected to a further voltage divider (22, 23), which is connected between the supply voltage (U_{B}) and earth potential (0), the outputs (28) of the comparators (21) are each connected via a diode (29) to a common output (200), and **in that** a signal is produced at this output (200) when a voltage peak (52, 74) which exceeds a threshold value that can be defined by a reference voltage (U_{Ref}) at the output (200) occurs in the induced voltages in one of the windings (1-4) of the stepping motor (10).

6. Stopping and stalling identification according to Claim 1, **characterized in that** rigid stalling is detected when the stepping motor (10) is stationary, and **in that** in this case, in a test step in which current flows through one winding of the stepping motor, [lacuna] and the voltage (62) which may be induced in the other winding of the stepping motor in this case and is essentially zero in the event of rigid stalling is evaluated.

7. Stopping and stalling identification according to Claim 6, **characterized in that** the evaluation circuit (30) contains a comparator (31) for identification of rigid stalling for any given winding of the stepping motor (10), to which comparator (31) voltage peaks which are passed via a diode (36) and a voltage divider (34, 35) can be supplied, and at which the comparator (31) is connected directly to the output (37) and emits an output signal when a correspondingly high voltage peak has been induced.

## Revendications

1. Détection de butée et de blocage d'un moteur pas à pas (10) dans laquelle, pour déterminer une grandeur caractéristique à partir de l'évolution d'une grandeur actuelle du moteur par comparaison avec une valeur de référence, un signal est généré pour la détection de butée ou de blocage,
**caractérisée en ce que**
un circuit d'exploitation (20, 30) est prévu qui détecte la tension (50) induite dans au moins un enroulement (1 à 4) non alimenté du moteur pas à pas (10), appelé par un enroulement alimenté du moteur pas à pas et qui l'exploite pour déterminer si le moteur pas à pas est bloqué et l'exploitation par le circuit d'exploitation (20) s'effectue après un blocage élastique dans lequel le moteur pas à pas ne peut pas compléter un pas et oscille et ainsi une tension en opposition de phase induite dans l'enroulement non alimenté est détectée.

2. Détection de butée et de blocage selon la revendication 1,
**caractérisée en ce que**
pour la détection du blocage élastique, le circuit d'exploitation (20) détecte des crêtes (52, 74) dans l'évolution de la tension induite (50, 72) dans l'enroulement non alimenté.

3. Détection de butée et de blocage selon la revendication 2,
**caractérisée en ce que**
lors du dépassement d'une valeur seuil définie, les crêtes (52, 74) sont reconnues en tant que blocage élastique.

4. Détection de butée et de blocage selon la revendication 1, 2 ou 3,
**caractérisée en ce que**
la détection du blocage élastique s'effectue alors que le moteur pas à pas fonctionne lentement de façon définie.

5. Détection de butée et de blocage selon la revendication 1 ou l'une quelconque des revendications 2 à 4,
**caractérisée en ce que**
pour la détection du blocage élastique, le circuit d'exploitation (20) contient un comparateur séparé (21) pour chaque enroulement (1 à 4) du moteur pas à pas (10), à chaque entrée non inversive des comparateurs (21), la tension induite est appliquée au travers d'une diode (26) et d'un condensateur (27), et chaque entrée non inversive des comparateurs (21) est chaque fois reliée à un diviseur de tension (24, 25) raccordé entre la tension d'alimentation (U_{B}) et le potentiel de la masse (0) :les entrées inversives des comparateurs (21) sont appliquées à un autre diviseur de tension (22, 23) raccordé entre la tension d'alimentation (U_{B}) et le potentiel de la masse (O) ; les sorties (28) des comparateurs (21) sont chaque fois dirigées au travers d'une diode (29) vers une sortie commune (200), et à cette sortie (200) figure un signal lorsque se présente dans l'un des enroulements (1 à 4) du moteur pas à pas (10) une crête de tension (52, 74) excédant une valeur seuil définissable à la sortie (200) par une tension de référence (U_{ref}).

6. Détection de butée et de blocage selon la revendication 1,
**caractérisée en ce qu'**
une détection d'un blocage ferme s'effectue lors de l'immobilisation du moteur pas à pas (10) et alors, dans une étape de test dans laquelle un enroulement du moteur pas à pas est alimenté, la tension (62) alors éventuellement induite dans l'autre bobine du moteur pas à pas qui, pour un blocage ferme est pour l'essentiel zéro est exploitée.

7. Détection de butée et de blocage selon la revendication 6,
**caractérisée en ce que**
le circuit d'exploitation (30) contient, pour la détection d'un blocage ferme, un comparateur (31) pour un enroulement quelconque du moteur pas à pas (10) auquel peuvent être conduites des crêtes de tension dirigées au travers d'une diode (36) et d'un diviseur de tension (34. 35) et dans laquelle le comparateur (31) est directement raccordé à la sortie (37) et délivre un signal de sortie lorsqu'une crête de tension d'une hauteur correspondante est induite.
